# EUROPEAN PATENT SPECIFICATION

(11) **EP 0 823 871 B1**
(45) Date of publication and mention of the grant of the patent: **22.12.1999**
(21) Application number: 96919660.9
(22) Date of filing: 03.05.1996
(51) Int. Cl.: B29C 45/17

(54) **METHOD AND SYSTEM FOR INJECTION MOLDING UTILIZING A VARIABLE VOLUME SPILL CAVITY AND ARTICLE PRODUCED THEREBY**
VERFAHREN UND SYSTEM ZUM SPRITZGIESSEN UNTER VERWENDUNG EINES ÜBERSCHUSSRAUMS MIT VERÄNDERLICHEM VOLUMEN UND DADURCH HERGESTELLTER GEGENSTAND
PROCEDE ET SYSTEME DE MOULAGE PAR INJECTION FAISANT APPEL A UNE CAVITE DE COULAGE A VOLUME VARIABLE ET PRODUIT FABRIQUE SELON CE PROCEDE

(30) Priority: 03.05.1995 DE 19515741; 21.06.1995 US 492589
(43) Date of publication of application: 18.02.1998
(73) Proprietor: Melea Limited, Gibraltar (GI)
(72) Inventor: Hendry, James Watson, Brooksville, FL 34609 (US)
(74) Representative: Rehders, Jochen, Dipl.-Ing.
(86) International application number: EP9601849
(87) International publication number: WO9634731

(56) References cited:
- EP-A- 0 438 279
- EP-A- 0 678 370
- PATENT ABSTRACTS OF JAPAN vol. 96, no. 4, 30 April 1996 & JP,A,07 323436 (IDEMITSU PETROCHEM CO LTD), 12 December 1995,
- PATENT ABSTRACTS OF JAPAN vol. 18, no. 616 (M-1710), 24 November 1994 & JP,A,06 238697 (HONDA MOTOR CO LTD), 30 August 1994,
- PATENT ABSTRACTS OF JAPAN vol. 95, no. 1, 28 February 1995 & JP,A,06 297522 (IDEMITSU PETROCHEM CO LTD), 25 October 1994,
- PATENT ABSTRACTS OF JAPAN vol. 18, no. 302 (M-1618), 9 June 1994 & JP,A,06 064024 (HONDA MOTOR CO LTD), 8 March 1994,
- PATENT ABSTRACTS OF JAPAN vol. 17, no. 433 (M-1461), 11 August 1993 & JP,A,05 096560 (ASAHI CHEM IND CO LTD), 20 April 1993,
- PATENT ABSTRACTS OF JAPAN vol. 17, no. 552 (M-1491), 5 October 1993 & JP,A,05 154862 (HONDA MOTOR CO LTD), 22 June 1993,

## Description

### Cross-Reference To Related Application

This application is related to US patent application Ser. No. 08/166 255, filed December 13, 1993, entitled: "Method and System for Controlling a Pressurized Fluid and Valve Assembly for Use Therein", which has the same Assignee as the Assignee of the present invention and which is hereby incorporated by reference.

### Technical Field

This invention relates to plastic injection molding and, more particularly, to plastic injection molding which includes a spill cavity.

### Background Art

In the plastic injection molding art, the usual challenge facing a product designer is to design an article having requisite strength for the product application and uniform surface quality for satisfactory appearance, but to avoid excessive wight, material usage and cycle time. A design compromise must often be made between strength and plastic thickness. A relatively thicker plastic section in the article, such as a structural rib, will incur greater weight, material usage, cycle time and induce sink marks and other surface defects due to thermal gradients in the area of the thickened section.

It is known in the plastic molding art to use pressurized fluid in conjunction with the plastic molding of articles as shown in US Patent No. 5 098 637 to Hendry. The pressurized fluid is typically nitrogen gas which is introduced into the mold cavity at or near the completion of the plastic injection. The pressurized fluid serves several purposes. First, it allows the article so formed to have hollow interior portions which correspond to weight and material savings. Second, the pressurized fluid within the mold cavity applies outward pressure to force the plastic against the mold surface while the article solidifies. Third, the cycle time is reduced as the gas migrates through the most fluent inner volume of the plastic and replaces the plastic in these areas which would otherwise require an extended cooling cycle. Fourth, the gas pressure pushes the plastic against the mold surfaces, thereby obtaining the maximum coolant effect from the mold.

However, as the dimensions of the molded article increase, the gas must do more work to migrate through the volume of the mold cavity to assist in setting up the article within the cavity. If the pressure of the gas is too great as it enters the mold cavity, there is a risk that it may rupture or blow out the plastic within the mold cavity, i.e., the gas is not contained within the plastic. Thus, there have been practical limitations in the adaptation of gas injection in the plastic molding field.

The above-noted US patent to Hendry solves most of these problems. In this known injection molding device the channel connecting the mold cavity with the supplementary spill cavity is open at all times and the volume of this supplementary spill cavity can be modified by screwing an insert in the form of a screw into or out of this supplementary spill cavity to a greater or lesser extent.

This known device and the process have proven their practicality in many applications, but it has been determined that in particular in the case of parts which in some sections exhibit thicker areas, such as thicker edge areas or webs or ribs, which alone are to be provided with a cavity, difficulties appeared since the pressurized gas can also penetrate into areas which are not to be hollow when penetrating into the plastic resin previously injected into the mold cavity, particularly in relatively thin-walled areas so that here an unintended weakening of the component could occur.

In addition it has been found when using the known device to be disadvantageous that the volume of the supplementary spill cavity cannot be adjusted to corespond to the momentary conditions prevailing within the course of the injection molding cycle but rather that in the best case adaptation to varying component geometries or plastic compounds could be effected with the injection molding device at a standstill.

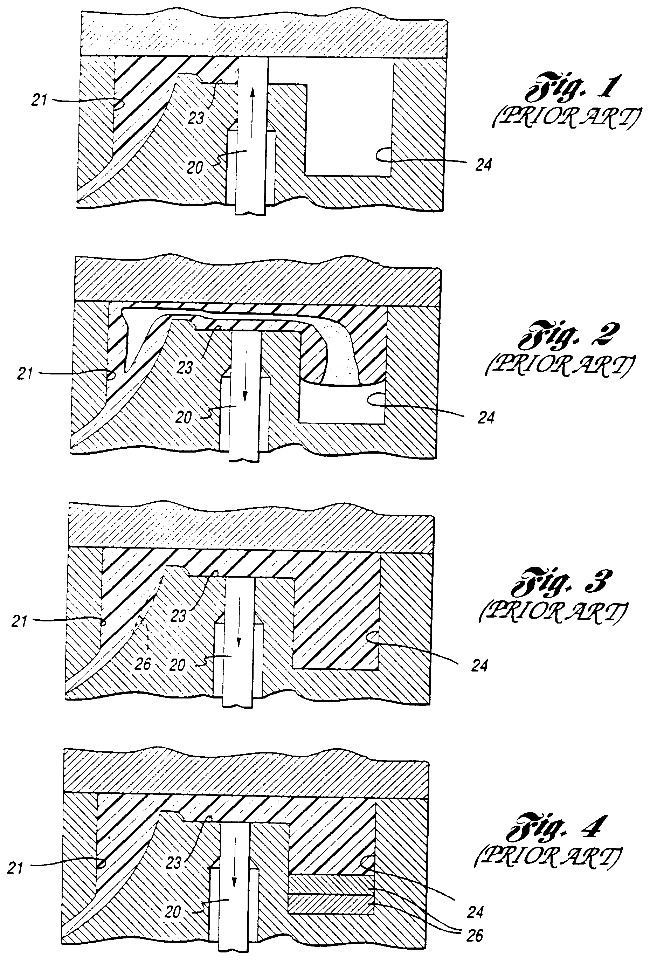

As illustrated in Figures 1 - 4, another approach is to use a fixed volume spill cavity 24 with a block pin 20 and shims 26 to control the volume of plastic going into the spill cavity 24. This approach is described in EP-Patent 3 393 315 assigned to Ferromatic Milacron Maschinenbau GmbH.

The block pin 20 serves to allow displacement of the still fluent core of the plastic article by means of a pressurized fluid only after the mold cavity has first been filled completely with plastic resin. In addition, the displacement of the still fluid plastic is to be carried out in such a way that the remainder of the fluent core to be displaced closes each discharge opening in a plug-like fashion in such a way that no reduction in the wall thickness of the plastic article takes place. Nevertheless since the displacement of the fluent core to be displaced is effected without opposing pressure and the volume of each shot executed by an injection molding machine while injection molding plastic articles can fluctuate from one shot to the next, this device does not guarantee that the discharge opening will always in fact be closed in a plug-like fashion during each shot. Neither can closing the block pin 20 once again ensure that the discharge opening will in fact always be closed in a plug-like fashion. If, in addition, in this known device the shot volume of the injection molding machine is for example greater than the volume of the mold cavity, extreme pressure develops suddenly when the mold cavity is full and the block pin 20 is closed so that the injection molding machine must be able to exhibit correspondingly high clamping power and the associated advantages of injection molding by injecting a pressurized gas into the plastic resin previously injected into the mold cavity, namely the possibility of manufacturing large plastic articles on injection molding machines with relatively low clamping force, is no longer given.

In figure 1, the pin 20 is in its up position blocking plastic flow from the molding in the article-defining cavity 12, through a runner 23 and into the spill cavity 24. In figures 2 - 4, the pin 20 is in its down position allowing plastic to go to the spill cavity 24 by the pressure of the gas.

However, injection molding machines do not deliver the same quantity of plastic shot after shot. When doing straight compact injection molding, the cushion of plastic in front of the screw after the mold is full and the high pressure packing starts and it takes care of this inacurracy of the screw ram to deliver the same quantity of plastic on each shot (i.e., the cushion can fall from 10 mm to 5 mm with no difficulty in molding the compact injection molding).

However, with some parts, one does not want to pack the molding. One wants to just fill the cavity. If one packs the molding, a strain pattern will already be in place within the molding and the hollowing out of the part will not relieve the strain already in place in the molding.

Figure 2 illustrates blow out in the spill cavity 24 causing a loss of gas pressure in the molding in the article defining cavity 21. One result of this is a possible shrinkage due to loss of gas pressure in the molding in the article defining cavity 21. Also, gas leakage may occur at the mold parting line.

Figure 3 illustrates the use of too much plastic which would result in sink marks at reference numeral 26.

Finally, figure 4 illustrates the addition of the shims 26. However, overpacking and blow out as illustrated in figures 3 and 2, respecitively, can still occur.

In EP-A-0 438 279 a system for injection molding a hollow object is disclosed, comprising means for injecting a quantity of fluid plastic into a mold cavity having a shape defining at least a portion of the article, means for introducing a charge of pressurized gas into the mold cavity to displace a portion of the plastic from the mold cavity into a spill cavity having a variable volume flow coupled to the mold cavity and means for venting the gas from the mold cavity wherein shutter means are arranged in the variable volume spill cavity, displaceable from a first positon in which the mold cavity is closed to a second position in which the mold cavity and the corresponding spill cavity are interconnected and wherein the mold cavity is completely filled with fluid plastic so that the pressure exerted by the walls of the mold cavity on the molded object is comparable to that in conventional injection molding techniques for producing solid objects. When the mold cavity is filled and packed the shutter means are displaced into a second position for displacing a quantity of plastics material from inside of the mold cavity to the spill cavity so as to produce a hollow object in each of the mold cavities. JP-A-6238697 and and JP-A-6297522 show similar system to injection mold hollow objects.

### Summary of the Invention

An object of the present invention is to provide a method and system for injection molding utilizing a variable volume spill cavity which: (1) eliminates the need for a shut off pin in a fixed volume shut off situation; (2) eliminates blow out in a spill over area that causes loss of gas pressure in the gas channel and resulting collapsing of the walls of the gas channels; (3) eliminates inaccuracies in the screw ram to deliver the same quantity of plastic shot after shot; and (4) allows positive displacement of plastic into a spill cavity to insure no blow out as in figure 2 or solid as in figure 3, and a strain-free molding (i.e., no overpacking).

Another object of the invention is to improve an injection molding device and a process of the nature mentioned at the outset and to provide an injection molding device along with a process for manufacturing a plastic article, hollow at least in part, with which these hollow sections can be manufactured in a closely defined fashion with reproducibly uniform wall thicknesses without requiring costly, computer-supported control of the shot volume within narrow tolerances.

In carrying out the above object and other objects of the present invention, a method is provided for injection molding a hollow plastic article. The method includes the steps of injecting a quantity of fluid plastic into a mold cavity having a shape defining at least a portion of the article; displacing a portion of the plastic from the mold cavity into a spill cavity having a volume flow coupled to the mold cavity by introduction of a charge of pressurized gas into the mold cavity; permitting the injected plastic to solidify; venting the gas from the mold cavity; and removing the plastic article from the mold. The improvement of the method includes the step of allowing the volume of the spill cavity to increase during the step of displacing to produce a substantially strain-free hollow plastic article.

Preferably, the volume of the cavity is defined by an upper surface of a piston reciprocally mounted in a cylinder.

In one embodiment, the method further includes the step of increasing pressure on a lower surface of the piston and to move the piston to an up position and wherein the step of allowing includes the step of reducing the pressure on the lower surface of the piston to allow the piston to move to a down position.

Further in carrying out the above objects and other objects of the present invention, a system ist provided for carrying out the above-noted method steps.

Still futher in carrying out the above objects and other objects of the present invention, another method for injection molding a plastic article is provided. The method includes the steps of injecting a quantity of fluid plastic into a mold cavity having a shape defining at least a portion of the article; allowing a portion of the plastic from the mold cavity to flow into a spill cavity having a volume flow coupled to the mold cavity; permitting the injected plastic to solidify; and removing the plastic article from the mold. The improvement of the method includes the step of allowing the volume of the spill cavity to increase during the step of injecting to produce a substantially strain-free plastic article.

In the one embodiment, the method and system of the present invention utilize pneumatic pressure so that when the pressure of the plastic being injected by a screw ram overcomes the pneumatic pressure on the lower surface of the pneumatic piston, the piston will move downward making sure that the molding will not see more pressure than the fill pressure. Therefore, the hollow plastic part will be substantially strain-free. In this way, the inaccuracy of the screw ram to deliver the same quantity of plastic shot after shot is compensated for.

Still further in carrying out the above objects and other objects of the present invention a movable partition can be located in the supplementary, variable-volume spill cavity which is subjected to application of force which would reduce the volume of the supplementary spill cavity in the direction of the mold cavity, which force, to achieve controlled acceptance of plastic resin by increasing the volume of the supplementary spill cavity, is greater than the force exerted on the partition by the pressure of the plastic during the mold cavity filling phase and which at the latest with the start of displacement of plastic resin into the supplementary spill cavity is less than the force exerted on the partition by the pressure of the gas injected into the plastic resin in the mold cavity.

The partition can preferably comprise a slidable piston sealed inside a bore which at the commencement of the injection procedure is in contact with a stop which defines the smallest possible volume of the supplementary spill cavity, wherein the application of pressure to the piston can preferably be effected by a pressure medium and in particular by the pressurized gas to be injected into the plastic resin.

The force acting upon the piston, i.e. the pressure of the gas when using gas under pressure, is to be dimensioned so that even if plastic has already flowed into the channel for the supplementary spill cavity during the filling of the mold this plastic cannot pass into the latter cavity insofar as the injection procedure for the plastic is still progressing at a pre-determined low pressure, i.e. for as long as the injected plastic resin adjacent to wall sections or in the areas of the mold cavity exhibiting small cross sections has not yet begun to solidify.

During the filling of the mold cavity and at the beginning of the injection of the pressurized gas into the plastic resin previously injected into the mold cavity the pressure of the gas applied to the piston may be equal to the pressure of the gas injected into the plastic resin. At the moment at which the mold cavity is filled with so much plastic resin and this plastic resin has cooled and solidified adjacent to the inside walls of the mold cavity so that the displacement of the still fluent plastic resin in the core can begin, the gas pressure acting on the piston must be reduced to allow retraction and thus displacement of the plastic resin into the supplementary spill cavity.

If on the other hand the shot volume generated by the injection molding machine is greater than the volume of the mold cavity, a portion will be displaced directly into the supplementary spill cavity during injection of the plastic resin in the mold cavity and the piston under pressure will retract without there being any appreciable increase in injection pressure so that the clamping pressure of the injection molding machine need not be modified.

Since when injecting pressurized gas into the plastic resin previously injected into the mold cavity the pressure of this gas as a rule will be greater than the injection pressure for the fluent plastic resin, it is preferable to locate a pressure regulation valve and/or a flow control valve in a pressure medium line communicating with the bore for the piston. The pressure regulation valve serves to keep the pressure of the pressurized gas acting on the piston at a pre-determined value which is at least equal to the injection pressure and less than the gas pressure of the gas injected into the plastic resin previously injected in the mold cavity so as, in this way, to achieve controlled acceptance of plastic resin in the supplementary spill cavity while, by means of the flow control valve, to effect controlled deflection of the piston while plastic resin is being accepted inside the supplementary spill cavity.

Since the gas pressure acting on the piston when the mold is opened to demold the plastic article and the plastic which has passed into the supplementary spill cavity has not been reduced fully to atmospheric pressure but rather preferably stabilizes at an adjustable value, the piston can be used as the ejector for the plastic resin which has been displaced into the supplementary spill cavity and solidified.

In order to keep the piston from exiting its bore in response to the effect of the gas pressure, the piston may exhibit a sealing gasket and a pressure relief bore extending from the rear face of the piston to which pressure medium is applied to a space below the seal. As soon as the piston has advanced far enough outside its bore to connect the pressure relief bore with the environmental air, the gas can escape through the relief bore so that the piston does not move any further.

It is also possible to provide a mechanical stop holding the piston in its ultimate position, preferably comprising a sealed piston rod passing out of the bore for the piston, the head of which, located on the outside, makes contact with the stop when the piston reaches its ultimate position. Hydraulic fluid, which is as a rule always available at an injection molding machine, can be used as the pressurized medium to apply pressure to the piston.

To carry out the objects mentioned at the outset and other objects of the invention another process to manufacture a plastic article, hollow at least in part is provided, comprising the following steps:
- injecting a fluent plastic resin through a sprue channel into a mold cavity,
- injecting a pressurized gas into the plastic resin previously injected into the mold cavity, at the latest when the mold cavity is filled with plastic resin,
- displacing a part of the still fluent plastic resin out of the section of the plastic article to be made hollow and into a supplementary, variable-volume spill cavity communicating with the mold cavity through a channel
- against the force of a partition to which force is applied inside the supplementary spill cavity for controlled acceptance of plastic resin by increasing the volume of the supplementary spill cavity, this force being greater than the pressure applied by the plastic to the partition during the filling of the mold cavity and at the latest at the commencement of displacement of plastic resin into the supplementary spill cavity being less than the pressure applied to the partition by the gas injected into the plastic resin inside the mold cavity,
- cooling and solidifying of the plastic resin,
- releasing pressure in the hollow section formed by the injection of gas,
- demolding the plastic article and the plastic displaced into the supplementary spill cavity.

The force acting on the partition can preferably be generated by a pressure medium, in particular by the pressurized gas injected into the plastic resin previously injected into the mold cavity, the pressure of which is adjustable.

If the pressure and the volume of the gas acting on the partition are adjusted and dimensioned in such a way that pressure equilibrium is established on both sides of the partition once a pre-determined volume of plastic resin has been displaced into the supplementary spill cavity and the partition has retracted appropriately, then exactly that volume of plastic resin required for controlled generation of the plastic article, hollow at least in part, will be displaced into the supplementary spill cavity. In addition this gas pressure, by way of the force exerted on the partition, can be used to effect during demolding the ejection of the plastic which had been displaced into the supplementary spill cavity and solidified.

Figures 5 - 7 broadly illustrate the method and system of the present invention wherein the pin and shims 26 of figure 4 have been eliminated and replaced with a variable volume spill cavity, the volume of which is controlled by a piston 30, the lower surface 32 of which is exposed to a gas pressure from a control circuit (not shown therein).

Figure 5 illustrates the gas piston 30 in its up position with the mold closed during injection of the plastic into an article defining cavity 21 and into a runner 23.

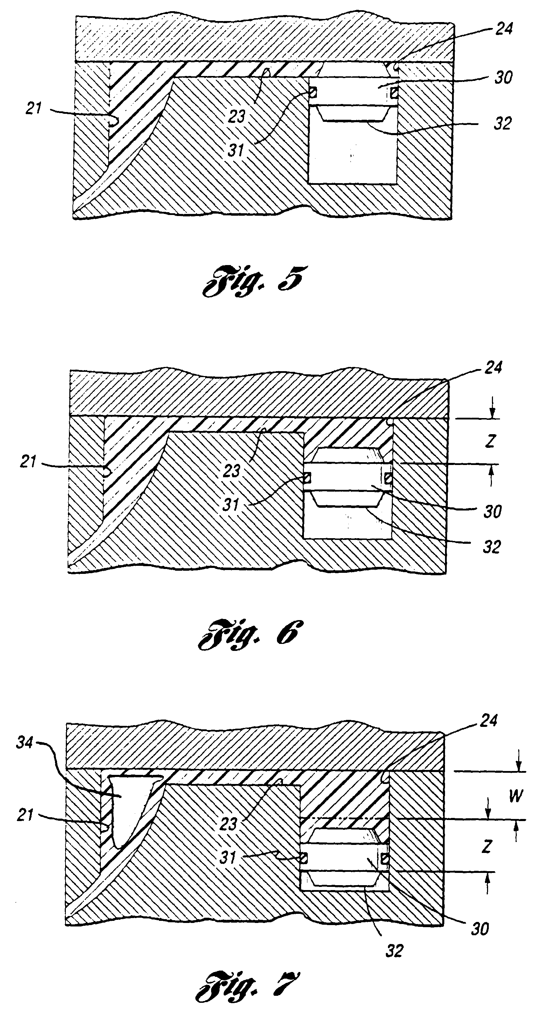

Figure 6 illustrates the location of the plastic after it has been injected into the article defining cavity 21 wherein inaccuracies in shot weight delivered by the screw ram are taken up by an upper portion of the spill cavity 24, identified by reference letter Z. If the injection pressure of the plastic to fill the mold is, for example, 70 bar (1000 psi) then Z will take up the 70 bar (1000 psi) and not allow the screw ram to go into a packing phase at a pressure much higher than 70 bar (1000 psi). If such a pressure over 70 bar (1000 psi) was reached, this would strain the molding in the article defining cavity 21.

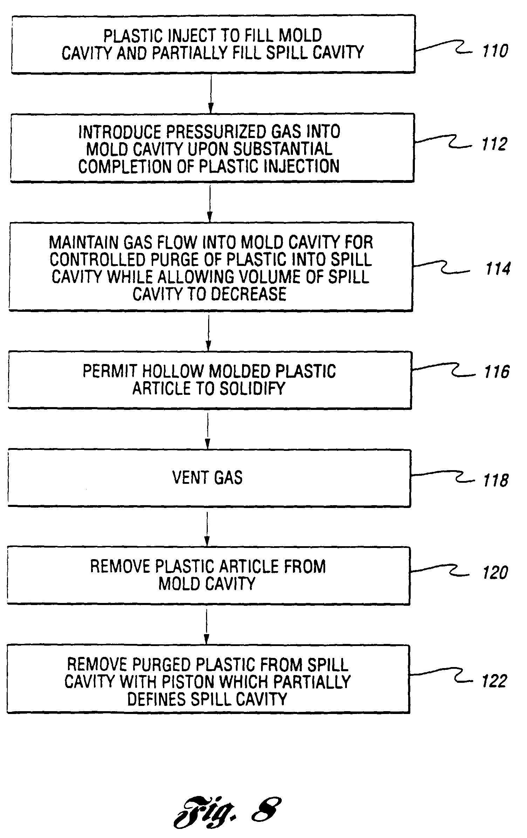

When gas is injected into the molding in the article defining cavity 21 to create a void 34, excess plastic is discharged into the spill cavity 24 and is taken up, the amount of which being indicated by reference letter W in Figure 7.

The present invention admits to molding of relatively large size structural articles for use in diverse product fields, such as bumper having a pair of end wings for an automobile.

The above objects and other objects, features, and advantages of the present invention are readily apparent from the following detailed description of the best mode for carrying out the invention when taken in connection with the accompanying drawings.

### Brief Description of the Drawings

Figure 1 is a schematic cross-sectional view partially broken away, of a prior art injection molding method utilizing a pin to prevent plastic flow into a fixed volume spill cavity;
Figure 2 is a view similar to Figure 1 with a pin in its down position and illustrationg blow out in the spill cavity due to the lack of sufficient amount of plastic in the article defining cavity;
Figure 3 is a view similar to Figure 2 except too much plastic has been utilized with resulting sink marks;
Figure 4 is a view similar to the views of Figures 2 and 3 with the addition of shims located at the bottom of the spill cavity;
Figure 5 is a view similar to Figures 1 - 4 illustrating the method and system of the present invention but without the use of a pin but rather including a pneumatically controlled piston;
Figure 6 is a view similar to Figure 5 after the step of plastic injection;
Figure 7 is a view similar to Figure 6 after the introduction of pressurized gas into the mold cavity to form the hollow part;
Figure 8 is a flow chart indicating the basic steps involved in the practice of the method of the present invention;

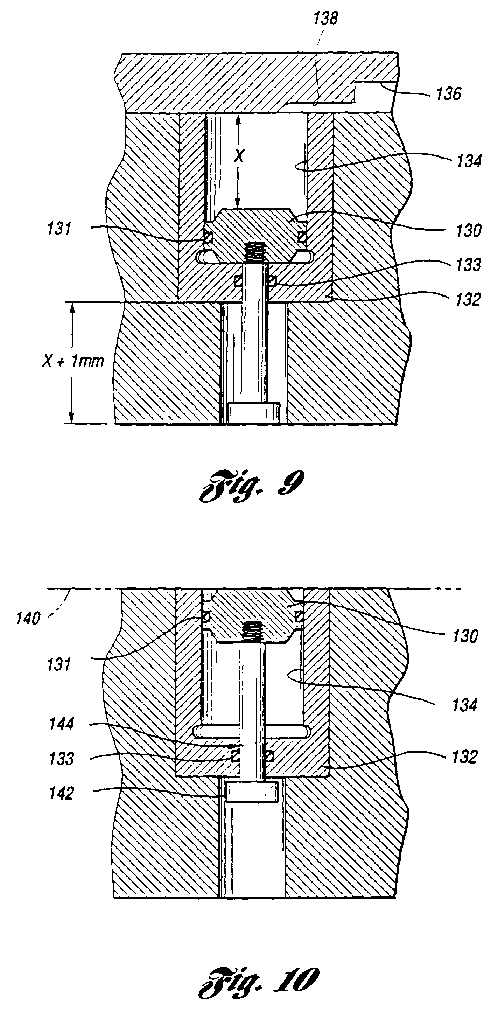

Figure 9 is a schematic cross-sectional view, partially broken away, wherein the piston of Figures 5 - 7 is connected to a stop;

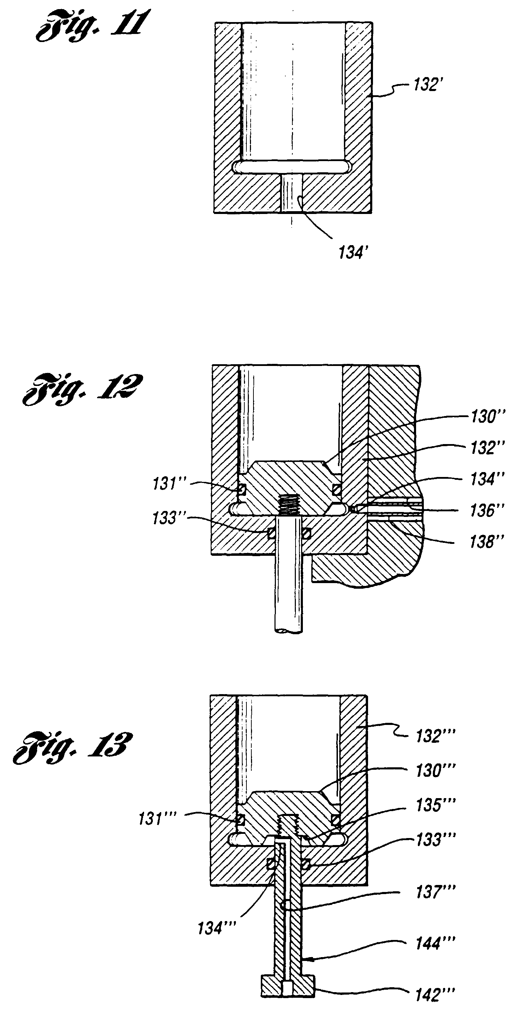

Figure 10 is a view similar to Figure 9 with the piston in its up position;
Figure 11 is a cross-sectional view of a cylinder for use with a piston which together define a variable volume spill cavity;
Figure 12 is a view similar to Figure 11 including a hole in the cylinder to supply pressurized gas to a lower surface of the piston;

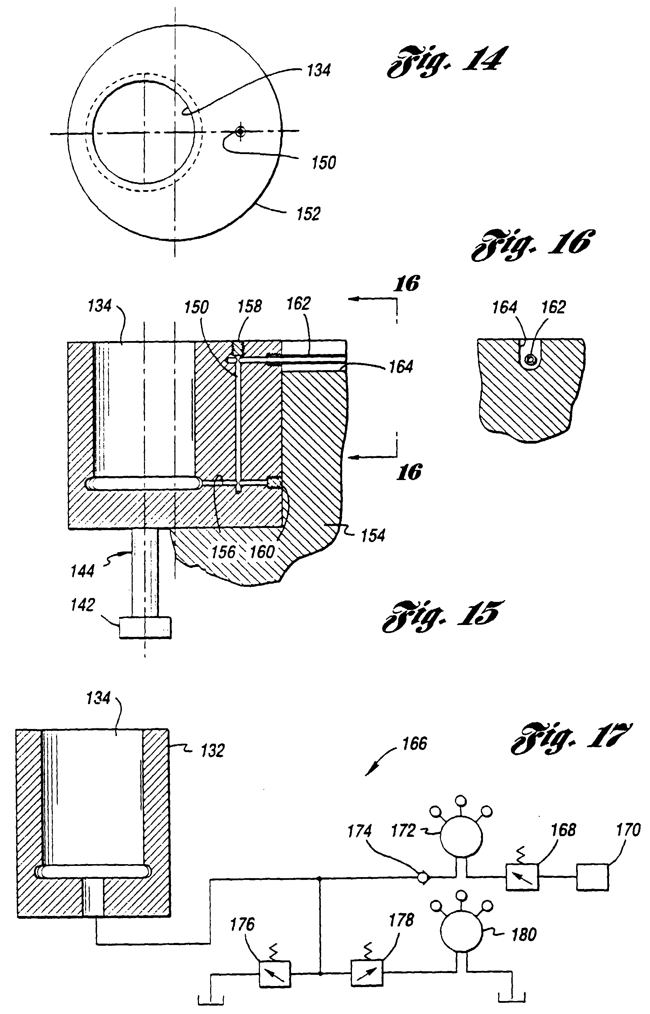

Figure 13 is a view similar to Figure 12 wherein a hole is formed through a stop pin to supply pressurized gas to the lower surface of the piston;
Figure 14 is a top plan view of a cylinder having an offset hole for supplying pressurized gas;
Figure 15 is a side elevational view, partially broken away and in cross-section, illustrating a gas passageway and gas pipe for allowing gas to enter and exit the cylinder;

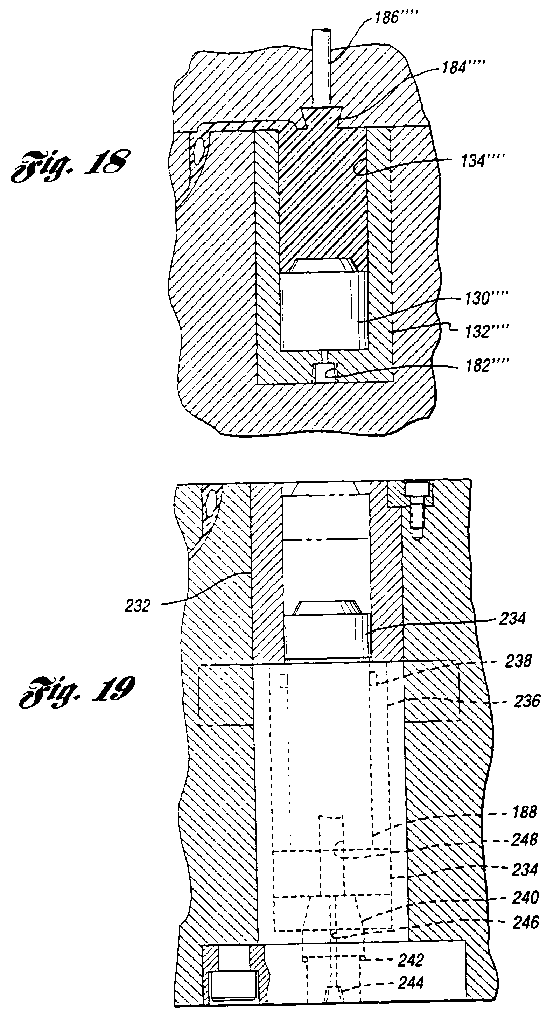

Figure 16 is an end view taken along lines 16-16 of Figure 15 and illustrating the gas pipe in a cut in the mold;
Figure 17 is a schematic diagram of a gas control circuit for controlling the flow of gas to and from the cylinder;
Figure 18 is a schematic cross-sectional view, partially broken away, wherein an ejector pin is illustrated to eject solidified plastic after it is pulled out of the spill cavity;
Figure 19 is a schematic cross-sectional view, partially broken away, wherein an air spring is utilized in the system of the present invention;

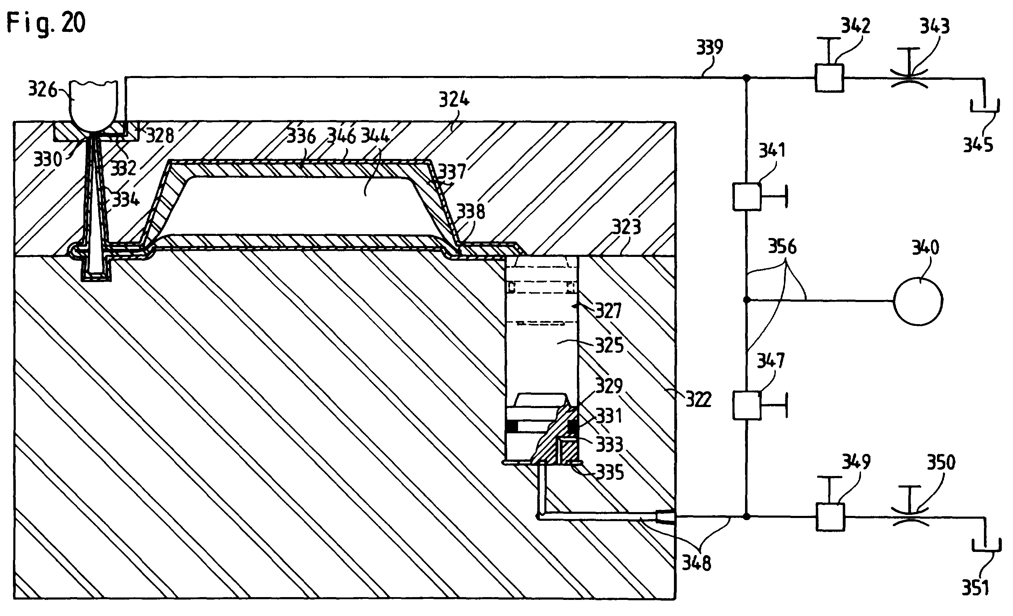

Figure 20 is a schematic view of another embodiment of an injection molding device used to manufacture a plastic article, hollow at least in part, with a sectional view of a mold; and

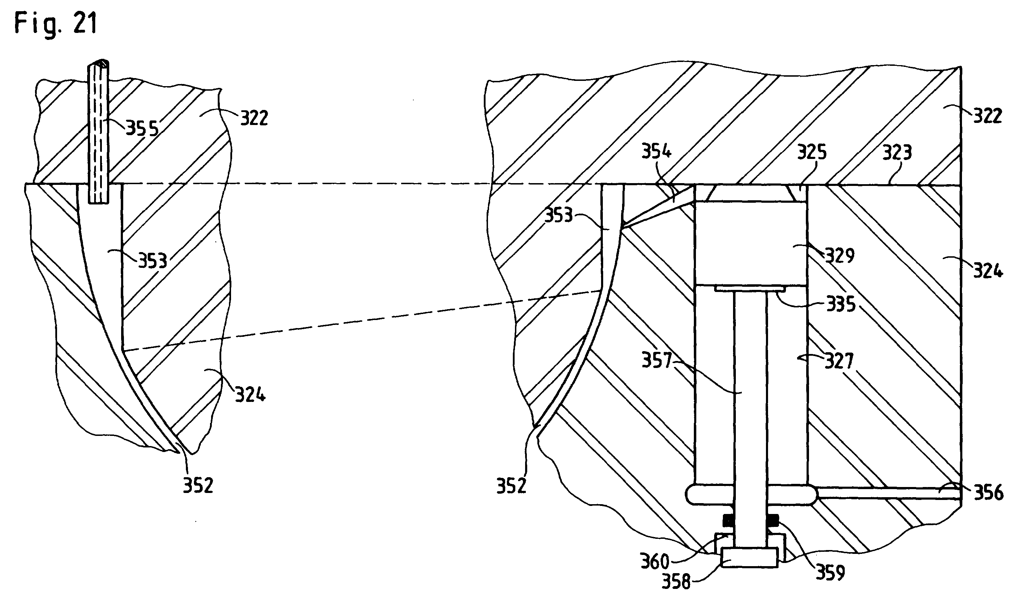

Figure 21 is a partial sectional drawing of a mold for another plastic article, hollow at least in part, with modified injection of the gas and with another channel between the mold cavity and the supplementary spill cavity.

### Best Mode for Carrying Out the Invention

Figure 8 is flow chart of the steps involved in practicing the process of the present invention.

In step 110, a quantity of molten plastic is injected from an injection molding machine into the article defining mold cavity 21 (i.e., Figures 5 - 7). The plastic may be most thermoplastics and works particularly well with glass or mineral filled thermoplastic polyester, commonly known by the trademark Valox of General Electric Co. The quantity is sufficient to fill the mold cavity and partially fill the spill cavity 24 as illustrated in Figure 5. Prior to plastic injection, the piston 30 is in its uppermost position as illustrated in Figure 5 due to gas pressure on its lower surface 32.

Fig. 6 shows how the piston 30 moves down to take up any excess plastic (i.e., "Z") during plastic injection.

In step 112 (i.e., Figure 7), a charge of pressurized gas is introduced into the mold upon substantial completion of the injection of the quantity of molten plastic.

In step 114, the gas flow into the mold is maintained in pressure and duration in amount and time sufficient to displace a controlled quantity of plastic from the article defining mold cavity into the spill cavity 24 which is flow. coupled to the mold cavity 21 by the runner 23. This causes an additional amount of plastic "W" to flow into the spill cavity 24. The gas tends to displace the hottest, most fluent plastic in the central portion of the mold cavity. Consequently, the molded plastic article has a hollow interior where the least viscous plastic has been displaced. The presence of the gas affords savings in weight and material usage. Added benefits include enhanced surface quality due to be outward pressure exerted by the gas, and reduced cycle time due to displacement of the relatively hot plastic from the central portion of the article.

In step 116, the article is permitted to solidify within the mold cavity 21 while the internal gas pressure is maintained.

In step 118, the pressurized gas is vented from the interior of the molded article preparatory to opening the mold. Numerous ways of venting are possible such as described in the US patent to Friederich 4 101 617.

In step 120, the plastic article is removed from the mold.

In step 122, the purged or displaced plastic is removed from the spill cavity 24 or reservoir. The piston 30 is pushed upward in the spill cavity 24 by pressurized gas. If the piston 30 has a stop secured thereto, the stop prevents the piston 30 from exiting the mold. In certain cases, steps 120 and 122 can be the common operation of ejecting the moldings so formed from the article defining cavity 21 and the spill cavity 24.

Referring now to Figures 9 and 10, there is illustrated a second embodiment of a piston 130 reciprocally mounted within a cylinder 132 which together define a variable volume spill cavity 134 flow coupled with an article defining cavity 136 via a runner 138. The piston 130 is shown in Figure 9 in its down position in which the spill cavity 134 may be filled along its X dimension with plastic waiting to be ejected.

Figure 10 illustrates the piston 130 in its up position wherein a mold parting line 140 of the mold is shown and wherein approximately 1 mm (exaggerated) is shown as a space between a stop 142 of a stop pin, generally indicated at 144, which is threadedly secured at its opposite end to the piston 130. Typically, the piston 130 is in its up position as illustrated in Figure 10 during plastic entry into the mold.

The method and system of the present invention can be practiced with or without the use of a positive stop.

Referring now to Figure 11, there is illustrated one possible gas entry position into a cylinder 132' at 134' when no positive stop is utilized for the piston 130.

As illustrated in Figure 12, an alternative location for a gas entry hole through a cylinder 132'' is at a position 134'' toned in a curved wall of the cylinder 132''. A hole 136'' may be toned in the side of the mold for a gas pipe 138'' for gas entry and gas exiting.

Figure 13 illustrates another embodiment wherein a recess 135''' is formed at the lower surface of a piston 130''' to allow gas to act on the lower surface. Gas flows through a stop pin, generally indicated at 144''', along its longitudinal axis to a gas hole 137''' in fluid communication with a second transversely extending hole 134''' in fluid communication with the recess 135'''. In the embodiment of Figure 13, a flexible hose (not shown) is required to communicate gas to the stop pin 144''' at its stop 142'''.

Referring now to Figure 14, there is illustrated the offset cylinder hole 150 to allow room for a gas line to be machined on the thick edge portion of the wall of the cylinder 152. This embodiment may be used with or without a positive stop.

Figure 15 is a side elevational view of the cylinder 152 in a mold 154 illustrating how fluidly communicating holes 150 and 156 may be plugged by plugs 158 and 160, respectively. A gas pipe 162, as is further illustrated in Figure 16, is shown positioned in a cut 164 formed in the mold.

Referring now to Figure 17, there is illustrated an example of a gas or pneumatic control circuit, generally indicated at 166, for use with the method and system of the present invention. The control circuit 166 includes a directional valve 168 coupled to a gas source 170. The directional valve 168 is also connected to a pressure reducing valve 172 which is fluidly coupled to the spill cavity 134 defined by the cylinder 132 through a check valve 174. The spill cavity 134 is also fluidly coupled to a vent valve 176 as well as to directional valve 178. The directional valve 178 is also coupled to a second pressure reducing valve 180.

Referring to Figures 9, 10 and 17, initially the directional valve 168 is energized after the mold closes and before plastic injection starts. Pressure from the pressure reducing valve 172 pushes the piston 130 within the cylinder 152 upward to its fully up position. Then the plastic is injected into the article defining cavity 136. When the plastic injection is stopped, valve 178 is energized and valve 168 is deenergized. This sets the pressure that the piston in the spill over 134 will be able to absorb or accept from the plastic being pushed from the thick section of the article defining cavity 136 through the gate 138 into the spill cavity 134.

When gas pressure is injected into the molding in the article defining cavity 136, it is greater than the gas pressure on the lower surface of the piston 130. Therefore, the piston 130 will move downward until the pressure on both faces of the piston 130 equalize. Then, the gas pressure on the lower surface of the piston 130 is maintained.

When the pressure of the gas injected into the molding equalizes with the gas pressure on the lower surface of the piston 130, no more plastic can go into the spill cavity 134.

After the part has set-up in the article defining cavity 136, the gas is vented by any well known method such as sprue break or by deenergizing valve 178 and energizing the vent valve 176 to vent the gas from the lower surface of the piston 130.

As the mold is opened, valves 168 and 180 are deenergized and energized, respectively, with valve 180 being set lower in pressure than valve 172. The valve 180 controls the piston 130 so that it will start to move upward, thereby ejecting the solidified overflow plastic from the spill cavity 134. When the piston 130 reaches the top of the spill cavity 134, valves 168 and 178 are deenergized. At this point, the system is ready for the next cycle.

Preferably, the pistons 30, 130, 130'' and 130''' include gas seals 31 (Figures 5 - 7), 131 (Figures 9 - 10), 131'' (Figure 12) and 131''' (Figure 13), respectively. Also, preferably, gas seals 133 (Figures 9 - 10), 133' (Figure 12) and 133'' (Figure 13) are disposed in their respective cylinders 132, 132'' and 132''' about their respective pin stops 144, 144'' and 144'''.

As the injection unit varies in shot size, the length of movement of the pistons 30, 130, 130'' and 130''' varies to compensate for the shot size variance.

Also, pressure equalization between the pressure of the gas in the molding within the article defining cavity 21 and the pressure of the gas on the lower surface 32 of the piston 30 is one of the important features of the present invention. When the pressures are equal, there is no movement of the piston 30 in the spill cavity 24. Also, the system may be a closed system in which no gas is added and no gas is vented.

The cylinder 132 may comprise a hardened steel bushing inserted into the mold and may particularly comprise a standard D.M.E. shoulder pin bushing which is hardened and precision ground. Multiple bushings or steel tube spacers may be used with O-rings sealingly positioned therebetween if a larger cylinder is required in order to obtain additional volume to receive the plastic from the article defining cavity 136.

Preferably, the piston 130 comprises a fine grain gas piston and which may include a gas safety outlet which extends from the lower surface of the piston 130 to a side wall surface of the piston 130 to prevent the piston 130 from exiting the mold if a stop pin such as the stop pin 144 is not provided.

Many different methods may be utilized to introduce a charge of pressurized gas into the article defining cavity 21. For example, a gas pin may be located adjacent the thick section of the mold as illustrated in Figures 5 - 7 to insert gas therein.

Oil pressure may be utilized instead of gas pressure in order to exert fluid pressure on the lower surface 22 of the piston 30. However, it is preferred to have nitrogen gas as the pressure on the lower surface 32 of the piston 30 since such controllable source of gas is already utilized to form voids 34 within the molding in the article defining cavity 21.

Also, movement of the piston 30 and ejecting the solidified plastic from within the spill cavity 24 may rupture the runner system 23 and cause gas in the molding to escape if one does not wish to vent the gas in the molding through a gas pin located adjacent the article defining cavity 21.

Referring now to Figure 18, there is illustrated a piston 130'''' in a cylinder 132'''' having an aperture 182'''' for allowing pressurized gas at a lower surface of the piston 130''''. The variable volume of a spill cavity 134'''' is shown filled with solidified plastic.

A spill over puller 184'''' mounted at one end of an ejector pin 182'''' pulls the solidified plastic out of the spill cavity 134'''' and the ejector pin 186'''' ejects the plastic after it is pulled out of the spill cavity 134''''.

Referring now to Figure 19, there is illustrated a conventional air spring 188 which may be utilized with a piston 234 instead of the pneumatic control circuit 166. The piston 234 is mounted in a hardened bushing such as a guide post bushing 232. The bushing 232 is mounted on a second bushing 236 which is sealed by a rod gas seal 238. A piston down stop 240 prevents downward movement of the piston 234. A gas seal 242 seals the down stop 240. A connector 244 allows gas to flow through an aperture 246 to a hole 248 in the piston 234.

The following steps are utilized in practicing the method and system of Figure 19:
1. Piston 234 is up when mold closes.
2. Pressure on piston 234 is equal to the plastic injection pressure.
3. During injection of plastic, the plastic in excess of what is required to fill the molding will go into the spill over defined by the bushing 232 only at the pressure of injection. This eliminates (a) overpacking of molding and (b) inaccuracy of injection unit to deliver same quantity of plastic on each shot. The gas pressure set on the air spring 188 will stay constant and not increase as plastic enters, as it is coupled to a gas relief valve (not shown) set at the injection pressure.
4. When gas is injected into the molding, the pressure on the piston 234 is reduced automatically to, for example, one-half of gas injection pressure.
5. As the pressure now on the piston 234 is locked in, as the plastic is pushed into the over flow area, the pressure on the piston 234 will incerase in direct proportion to its downward movement.
6. When the pressure from gas injection equalizes with the trapped pressure on the piston 234, no more movement of plastic into the spill over will occur. If not enough plastic goes into spill over, either reduce pressure on the piston 234 or increase pressure of gas injection. If too much plastic goes into the spill over, just reverse the above (i. e.; put more pressure on the piston 234 or decrease gas inlet pressure).
7. Open mold and eject spill over material in the bushing 232 out by putting pressure on the piston 234. The piston 234 will not leave the bushing 232 as the air spring 188 will have reached its maximum stroke when the topmost surface of the piston 234 is flush with the parting line of the mold. This design also eliminates the need for a shut-off pin between the article defining cavity and the spill over. This design further eliminates overpacking of the mold cavity and takes care of the inaccuracies of the screw to deliver precise shot weights on each cycle.

With reference to Figure 20 of an injection molding device for producing a plastic article 337, hollow at least in part, two halves of the mold 322, 324 are shown, between which a parting plane 323 is present. Integrated into the one mold half 322 is an additional spill cavity 325 in the form of a cylindrical bore 327 starting at the parting plane 323 and ending inside the mold half 322. A piston 329 is guided slidably inside the bore 327 and is sealed vis-à-vis the bore 327 by means of a gasket ring 331.

Located inside the mold half 324 is a mold cavity 336 which can be filled with fluent plastic resin delivered by an injection nozzle through a sprue channel 334 and a bore 330 in a bushing 328. A pressurized gas line 339 is connected at a bore 332 in the bushing 328, so that pressurized gas can be injected through the bore 332 intersecting bore 330 and into the plastic resin which has already been injected into the mold cavity 336.

The mold cavity 336 communicates with the supplementary spill cavity 325 by way of a channel 38 located in the area of the parting plane 323. Pressurized gas can be applied to one face of the piston 335 by way of a pressurized gas line 348. Used for this purpose is a pressurized gas source 340 which communicates via pressurized gas lines 356 on the one hand via a shut-off valve or a pressure regulation valve 341 with the pressurized gas line 339 and on the other hand via a shut-off valve or a pressure regulation valve 347 with the pressurized gas line 348, which in turn continues to bore 327 and the pressurized rear face of the piston 335.

The pressurized gas can be routed from the pressurized gas line 339 through a shut-off valve and, if appropriate, a flow regulation valve 343 into a reservoir 345 or to the atmosphere. The same purpose is served by a shut-off valve 349 and, if appropriate, a flow regulation valve 350 to route the pressurized gas from the pressurized gas line 348 into a reservoir 351 or to the atmosphere.

Since the pressurized gas is normally nitrogen, returning to the reservoirs 345, 351 can serve to capture the discharged nitrogen and to return it to the pressurized gas source 340 for re-use. If such re-utilization is not required or not desired, then the nitrogen can be discharged to the atmosphere.

To manufacture a plastic article 337 with a hollow section 344 fluent plastic resin is injected by way of an injection molding apparatus not illustrated through the injection nozzle 326, the bore 330 in the bushing 328 and the sprue channel 334 into the mold cavity 336.

During the injection of the plastic resin pressure is applied to one face 335 of the piston 329 by opening the shut-off or pressure regulation valve 347 and thus is located in its upper position, indicated with dashed lines, in which the forward face of the piston 329 is in contact with the mold half 324 in the area of the parting plane 323.

Once a certain quantity of fluent plastic resin has been injected into the mold cavity 336 the shut-off valve 341 is opened and pressurized gas is injected via the pressurized gas line 339 and the bore 332 into the plastic resin previously injected into the mold cavity 336.

If the injection of the pressurized gas into the plastic resin begins before the mold cavity 336 is completely filled with plastic resin, then the injection of the plastic is continued until the quantity required to produce the partially hollow article 337 has been injected. During this continued injection of the plastic resin pressurized gas will already be injected into the plastic resin, forming a hollow section 344 thereby and at the same time pressing the plastic resin against the wall surfaces 346 of the mold cavity 336.

Regardless of whether the pressurized gas is injected into the plastic resin before the mold cavity 336 is completely filled with plastic resin or whether the injection of the pressurized gas only begins after the mold cavity 336 has been completely filled with plastic resin, this means in both cases that the pressure prevailing in the mold cavity 336 is still relatively low so that the leading area of the plastic resin flowing through the channel 338 connecting the mold cavity 336 with the supplementary spill cavity 325 meets the pressurized piston 329 and can shift it only after the pressure in the mold cavity 336 exceeds the gas pressure applied to the rear face of the piston 335. This gas pressure can be regulated by way of the pressure regulation valve 347 or the shut-off valve 349 and the flow regulation valve 350 in such a way that the deflection of the piston 329 occurs in a regulated fashion so that controlled acceptance of plastic resin is effected by increasing the volume of the supplementary spill cavity 325.

Once the plastic resin has cooled and solidified in the mold cavity 336 and in the supplementary spill cavity 325 the gas pressure is vented from the hollow section 344 via the sprue channel 334, the bore 330, the opening 332, the pressurized gas line 339, the shut-off valve 332 and the flow regulation valve 343 at a controlled rate until substantially equivalent pressures prevail in the hollow section 344 and the external atmosphere. Now the two halves of the mold 322, 324 can be separated and the plastic article 337 along with the plastic located in the supplementary spill cavity 325 can be demolded. The usual ejector pins can be used to demold the plastic article 337, whereas the piston 329 is used to demold the plastic located in the supplementary spill cavity 325, the pressure acting on the rear face of the piston 335 causing it to function like an ejector pin.

While the plastic article 337 as per Fig. 20 exhibits a hollow section 344 not more closely defined, it can be seen in Fig. 21 that a plastic article 352 with a relatively thin wall exhibits a greater wall thickness in an edge area adjacent to the parting plane 323, which is to be blown hollow by injecting pressurized gas. In the case of the plastic article 342 it may for example be a elongate bumper for a motor vehicle, the edge section 353 of which is reinforced. In this case the mold cavity is filled completely with plastic resin by way of a sprue channel, not shown. One end of the thicker edge section 353 is joined with the spill cavity 325 by way of a tunnel channel 354. The piston 329 is in its upper position since an adjustable pressure has been applied to the rear face of the piston 335 via a bore 356 connected with the pressurized gas line 348. Pressurized gas can be applied to the opposed end of the thickened edge section 353 by way of a hollow needle 355 via the pressurized gas line 339 connected thereto.

If in an injection cycle the injection molding machine injects more plastic resin into the mold cavity than the mold cavity can accept, then this excess portion of the plastic resin will flow without any appreciable increase in the injection pressure or in the pressure prevailing inside the mold cavity through the tunnel channel 354 and into the supplementary spill cavity 325 and shifts the piston 329 against the pressure of the pressurized gas through a stroke length corresponding to the excess volume. Now, at the end opposite the thickened edge section 353, pressurized gas will be injected through the hollow needle 355 into the central area of the thickened edge, still fluent, displacing this portion, still fluent, into the supplementary spill cavity 325 while forming a hollow section in the thickened edge section 353.

When the valves 347, 349 shown in Fig. 20 are closed, the shifting of the piston 329 by the plastic resin displaced into the spill cavity 325 will effect an increase in gas pressure until pressure equilibrium prevails at both faces of the piston 329. The gas pressure in the hollow space in the thickened edge section 353 is maintained until the plastic article 352 has cooled and solidified enough that it can be demolded. To ensure that the plastic article 352 does not rupture during demolding due to the gas pressure prevailing inside it, the gas pressure is first vented at a controlled rate through the hollow needle 355 in that the shut-off valve 342 shown in Fig. 20 is opened allowing the gas to discharge at a controlled rate through the flow regulation valve 343.

Following equalization of pressure with the external atmosphere or with the low pressure in a receiver container the two halves of the mold 322, 324 are separated whereafter the plastic article 352 can be removed from the mold and the plastic located in the supplementary spill cavity 325 is ejected by the piston 329 to which gas pressure is applied.

The hollow needle 355 may, if appropriate, be of a retractable design in order not to influence the flow of the plastic resin and to prevent clogging by the plastic resin.

If the pressure of the pressurized gas delivered by the pressurized gas source 340 is greater than the pressure required to form the hollow section 344 in Fig. 20 or the hollow space in the thickened edge section 353 in Fig. 21, then the shut-off valve 341 may take the form of a pressure regulation valve. If the pressure of the pressurized gas delivered by the pressurized gas source 340 is equal to that required for injection into the plastic resin, then the valve 341 may take the form of a shut-off valve.

The valve 342 may also take the form of a shut-off valve if the holding pressure during the solidification of the plastic article 337 or 352 is equal to the pressure of the gas injected into the plastic resin which had already been injected into the mold cavity. If the holding pressure is to be lower, then the valve 342 can be engineered as a pressure regulation valve so that after a certain period the lower holding pressure can be attained using this pressure regulation valve 342.

The valve 347 can be engineered as a shut-off valve if the gas pressure applied to the rear face of the piston 335 during the initial phase may be equal to the pressure of the pressurized gas delivered by the pressurized gas source 340. In this case the gas pressure applied to the rear face of the piston 335 will have to be set for a lower value when the displacement of plastic resin from the mold cavity 336 into the supplementary spill cavity 325 is to begin. The required counter-pressure can be set in this case by a valve 349 engineered in the form of a pressure regulation valve and, if appropriate, can be reduced by way of the flow regulation valve 350 at a controlled rate down to atmospheric pressure or to the pressure in the reservoir 351.

If from the very outset a lower pressure is to be applied to the rear face of the piston 335 than that which is provided by the pressurized gas source 340, then the valve 347 can be engineered as a pressure regulation valve.

If gas pressure is maintained at the rear face 335 of the piston 329 through to the demolding of the plastic article 337 or 352, then this piston 329, as previously mentioned, acts as an ejector for the solidified plastic present in the supplementary spill cavity 325; in this case, however, it is necessary to prevent the piston 329 being driven out of its bore 327 by this gas pressure when the mold halves 322, 324 are separated. This is achieved in the embodiment as per Fig. 20 by way of a pressure relief bore 333, which extends from the rear face of the piston 335 to a space below the gasket ring 331 and which relieves the pressure at rear face of the piston 335 as soon as the piston 329 has advanced out of its bore 327 to the height of this pressure relief bore 333.

By contrast the piston 329 in the embodiment as per Fig. 21 exhibits a mechanical stop comprising a piston rod 357 attached to the piston 329, a head 358 attached thereto, and a stop surface 360 on the mold half 324. The piston rod 357 is sealed against the outside by way of a gasket ring 359 and when in the position shown in Fig. 21 the head 358 is not yet in contact with the stop surface 360 since the leading face of the piston 329 is in contact with a surface of the mold half 322 at the parting plane 323. If the mold halves 322, 324 are now moved away one from the other parallel to the axis of the piston 329 in order to demold the plastic article 352 and the plastic displaced into the supplementary spill cavity 325, the piston 329, responding to the gas pressure exerted on the rear face of the piston 335, will move from its retracted position corresponding to the volume of the plastic resin displaced into the supplementary spill cavity 325 into the position shown in Fig. 21 and beyond that until the head 358 strikes the stop surface 360, acting thereby as the ejector for the plastic displaced into the supplementary spill cavity 325 and solidified, without the piston 329 being driven out of its bore 327 by the gas pressure and exiting the bore.

While the best mode for carrying out the invention has been described in detail, those familiar with the art to which this invention relates will recognize various alternative designs and embodiments for practicing the invention as defined by the following claims.

## Claims

1. In a method for injection molding a hollow plastic article (337, 352) comprising the steps of:
- injecting a quantity of fluid plastic into a mold cavity (136, 21, 336) having a shape defining at least a portion of the article (337, 352);
- displacing a portion of the plastic from the mold cavity into a spill cavity (24, 134, 325) having a variable volume flow coupled to the mold cavity by introduction of a charge of pressurized gas into the mold cavity (21, 136, 336);
- permitting the injected plastic to solidify;
- venting the gas from the mold cavity (21, 136, 336) and
- removing the plastic article form the mold,
**characterized by**
- filling the mold cavity (21, 136, 336) without packing the fluid plastic,
- allowing the volume of the spill cavity (24, 134, 325) to increase in a controlled fashion to a final volume based on the amount of plastic injected into the mold cavity (21, 136, 336), the volume of the spill cavity (24, 134, 325) increasing during the step of displacing and/or during the step of injecting to produce a substantially strain-free hollow plastic article.

2. The method as claimed in claim 1 wherein the volume of the spill cavity is at least partially defined by an upper surface of a piston which is slidably mounted in a cylinder and having an up position and a down position and wherein the method further comprises the step of increasing the pressure on the piston to move the piston to its up position and wherein the step of allowing includes the step of reducing the pressure on the piston.

3. The method as claimed in claim 2 further comprising the step of increasing the pressure on the lower surface of the piston to move the piston to its up position to remove the portion of the plastic from the spill cavity after the step of venting.

4. The method according to one of claims 1 to 3,
**characterized by** the steps:
- injecting a fluent plastic resin through a sprue channel into a mold cavity,
- injecting a pressurized gas into the plastic resin previously injected into the mold cavity, at the latest when the mold cavity is filled with plastic resin,
- displacing a part of the still fluent plastic resin out of the section of the plastic article to be made hollow and into a supplementary, variable-volume spill cavity communicating with the mold cavity through a channel
- against the force of a partition to which force is applied inside the supplementary spill cavity for controlled acceptance of plastic resin by increasing the volume of the supplementary spill cavity, this force being greater than the pressure applied by the plastic to the partition during the filling of the mold cavity and at the latest at the commencement of displacement of plastic resin into the supplementary spill cavity being less than the pressure applied to the partition by the gas injected into the plastic resin inside the mold cavity,
- cooling and solidifying of the plastic resin,
- releasing pressure in the hollow section formed by the injection of gas,
- demolding the plastic article and the plastic displaced into the supplementary spill cavity.

5. The method according to claim 4, wherein the force applied to the partition is generated by a pressurized fluid, the pressure of which is adjustable.

6. The method according to claim 5, wherein the pressurized fluid injected into the plastic resin is the same gas used to apply the force to the partition.

7. The method according to claim 6, wherein the pressure and the volume of the gas acting on the partition is so adjusted and dimensioned that after the displacement of a pre-determined volume of the plastic resin into the supplementary spill cavity and the appropriate retraction of the partition, pressure equilibrium is achieved on both sides of the partition.

8. The method according to one or more of claims 4 to 7, wherein the force exerted on the partition causes the plastic displaced into the supplementary spill cavity and solidified during demolding to be ejected by the partition

9. A system for injection molding a hollow plastic article, the system comprising:
- means (326) for injecting a quantity of fluid plastic into a mold cavity (136; 21; 336) having a shape defining at least a portion of the article (337; 352)
- means (332, 339, 341, 356, 340) for introducing a charge of pressurized gas into the mold cavity (136; 21; 336) to displace a portion of the plastic from the mold cavity (21; 136; 336) into a spill cavity (24; 134; 325) having a variable volume flow coupled to the mold cavity (21; 136; 336); and
- means (342, 343) for venting the gas from the mold cavity (21; 136; 336),
**characterized by**:
- means (30; 130; 234; 329; 166; 340, 347, 348, 349, 350) for allowing the volume of the spill cavity (24; 134; 325) to increase in a controlled fashion to a final volume based on the amount of plastic injected into the mold cavity (21; 136; 336) in such a way that during the displacement of the portion of the plastic from the mold cavity (21; 136; 336) into the spill cavity (24; 134; 325) or during injecting, packing of the fluid plastic in the mold (154; 322, 324) is avoided and a substantially strain-free article is produced.

10. The system as claimed in claim 9 wherein the means for allowing includes a cylinder (132, 327) and a piston (30; 130; 234; 329) reciprocally mounted within the cylinder (132; 327) which together define the spill cavity (24; 134; 325) and wherein the system further comprises means (166; 340, 347, 349, 350) for controlling pressure exerted on the piston to control movement of the piston (30; 130; 234; 329) within the cylinder (132; 327).

11. The system as claimed in claim 10 wherein the means for controlling includes an air spring (188) for controlling pressure on the piston (234).

12. The system as claimed in claim 10 wherein the means for controlling includes a pneumatic control circuit (166) for controlling pneumatic pressure on the lower surface (32) of the piston (30; 130; 234; 329).

13. The system as claimed in claim 12 further comprising a stop (142; 358) associated with one of the piston (30; 130; 234; 329) and the cylinder (132; 327) to prevent movement of the piston (30; 130; 234; 329) out of the cylinder (132; 327).

14. The system as claimed in claim 13 wherein the stop includes a stop pin (144; 357) connected to the piston (30; 130; 234; 324) to move therewith.

15. The system as claimed in claim 14 wherein the stop pin (144''') includes a hole (137''') formed therein to fluidly communicate the lower surface of the piston (130''') with the pneumatic control circuit (166).

16. The system as claimed in claim 12 wherein the cylinder includes an aperture (134; 150; 156; 182''''; 348) therein to fluidly communicate the lower surface (82) of the piston (30; 130; 234; 329) with the pneumatic control circuit (166; 340, 347, 349, 350).

17. The system as claimed in claim 9 further comprising (186'''') means for ejecting the portion of the plastic from the spill cavity (134'''').

18. The system as claimed in claim 17 wherein the means for ejecting includes an ejector pin (186'''').

19. The system as claimed in any one of the claims 9 to 18 **characterized by**:
- at least one mold cavity (336) located inside a mold (322, 324),
- at least one sprue channel (330, 334) to inject fluent plastic resin under pressure,
- at least one bore (332, 355) for a pressurized gas to inject the gas into the plastic resin previously injected into the mold cavity (336),
- at least one additional adjustable-volume spill cavity (325) located inside the mold (322, 324), outside the mold cavity (336) and communicating with the same by way of a channel (338, 354),
- a movable partition (329) inside the supplementary spill cavity (325) and
- an application of force to the partition (329) reducing the volume of the supplementary spill cavity (325) in the direction of the mold cavity (336), this force being greater than the force exerted on the partition (329) by the pressure of the plastic during the filling of the mold cavity (336) and at the latest at the commencement of the displacement of the plastic resin into the supplementary spill cavity (325) being less than the force applied to the partition (329) by the pressure of the gas injected into the plastic resin inside the mold cavity (336).

20. The system according to claim 19, wherein the partition consists of slidable piston (329) sealed inside a bore (327).

21. The system according to claim 20, wherein the application of force to the piston (329) is effected by a pressurized fluid.

22. The system according to claim 21, wherein the pressurized gas injected into the plastic resin is used as the pressurized fluid.

23. The system according to claim 21 or 22, wherein a pressure regulation valve (347) and/or a flow regulation valve (350) is located in a pressurized fluid line (348) connected with the bore (327) for the piston (329).

24. The system according to one of the claims 21 to 23, wherein the piston (329) exhibits a gasket ring (331) and a pressure relief bore (333) extends from the rear face of the piston (335) at which the pressurized fluid is applied to a space below the gasket ring (331).

25. The system according to one or more of claims 18 to 24, wherein the movable partition (329) acts as an ejector for the plastic resin displaced into the supplementary spill cavity (325) and then solidified.

26. The system according to one or more of claims 19 to 25, wherein a mechanical stop (358, 360) is provided restricting the piston (329) at its ultimate position within the bore (327).

27. The system according to one or more of claims 19 to 26, wherein the supplementary spill cavity (325) is located in a mold half (322) at the end of a hollow section (344, 353) of the plastic article (337, 352) to be hollowed by applying gas under pressure, a channel (328, 354) in the area of the parting plane (323) between the two mold halves (322, 324) joins the mold cavity (336) with the supplementary spill cavity (325) and the opening (332, 355) for injecting the pressurized gas into the plastic resin is located at the beginning of the section (344, 353) of the plastic article (337, 352) to be hollowed by applying pressurized gas.

## Patentansprüche

1. Verfahren zum Spritzgießen eines hohlen Kunststoffgegenstandes (337, 352), das die Schritte umfaßt:
- Einspritzen einer fließfähigen Kunststoffmenge in einen Formhohlraum (136, 21, 336) mit einer wenigstens einen Teil des Gegenstandes (337, 352) festlegenden Form;
- Verdrängen eines Teils des Kunststoffs aus dem Formhohlraum in einen mit dem Formhohlraum in Fließverbindung stehenden, volumenveränderlichen Überschußraum (24, 134, 325) durch Einbringen einer unter Druck stehenden Gasfüllung in den Formhohlraum (21, 136, 336);
- Verfestigenlassen des eingespritzten Kunststoffs;
- Entlüften des Gases aus dem Formhohlraum (21, 136, 336) und
- Entfernen des Kunststoffkörpers aus der Form,
**gekennzeichnet durch**
- Füllen des Formhohlraums (21, 136, 336), ohne den fließfähigen Kunststoff zu verdichten,
- Gesteuertes Sich-Vergrößernlassen des Rauminhalts des Überschußraums (24, 134, 325) auf ein Endvolumen, das auf der in den Formhohlraum (21, 136, 336) eingespritzten Kunststoffmenge beruht, wobei sich der Rauminhalt des Überschußraums (24, 134, 325) während des Schritts des Verdrängens und/oder während des Schritts des Einspritzens vergrößert, um einen im wesentlichen spannungsfreien, hohlen Kunststoffgegenstand herzustellen.

2. Verfahren nach Anspruch 1, bei dem der Rauminhalt des Überschußraums wenigstens teilweise durch eine obere Fläche eines in einem Zylinder verschiebbar angeordneten Kolbens bestimmt wird der eine obere Stellung und eine untere Stellung hat, und bei der das Verfahren des weiteren den Schritt umfaßt: Erhöhen des auf den Kolben wirkenden Drucks, um den Kolben in seine obere Stellung zu bewegen, und bei dem der Schritt des Sich-Vergrößernlassens des Rauminhalts des Überschußraums den Schritt des Verminderns des auf den Kolben wirkenden Drucks einschließt.

3. Verfahren nach Anspruch 2 mit dem weiteren Schritt: Erhöhen des Drucks auf der unteren Fläche des Kolbens, um den Kolben in seine obere Stellung zu bewegen und um den Teil des Kunststoffs nach dem Entlüften aus dem Überschußraum zu entfernen.

4. Verfahren nach einem der Ansprüche 1 bis 3, **gekennzeichnet durch** die Schritte:
- Einspritzen eines fließfähigen Kunststoffs durch einen Angußkanal in einen Formhohlraum,
- Einbringen eines unter Druck stehenden Gases in den bereits in den Formhohlraum eingespritzten Kunststoff spätestens, wenn der Formhohlraum mit Kunststoff gefüllt ist,
- Verdrängen eines Teils des noch fließfähigen Kunststoffs aus dem hohl auszuführenden Bereich des Kunststoffgegenstandes in einen zusätzlichen, volumenveränderlichen, mit dem Formhohlraum über einen Kanal verbundenen Überschußraum
- gegen die Kraft einer kraftbeaufschlagten, beweglichen Trennwand im zusätzlichen Überschußraum für eine kontrollierte Aufnahme von Kunststoff durch Volumenvergrößerung des zusätzlichen Überschußraums, die größer als die durch den Druck des Kunststoffs während des Füllens des Formhohlraums und spätestens mit Beginn des Austreibens von Kunststoff in den zusätzlichen Überschußraum kleiner als die durch den Druck des in den Kunststoff im Formhohlraum eingebrachten Gases auf die Trennwand ausgeübte Kraft ist,
- Abkühlen und Verfestigen des Kunststoffs,
- Druckentlasten des durch Einbringen von Gas gebildeten hohlen Bereichs,
- Entformen des Kunststoffgegenstandes und des in den zusätzlichen Überschußraum verdrängten Kunststoffs.

5. Verfahren nach Anspruch 4, bei dem die die Trennwand beaufschlagende Kraft durch ein Druckmedium erzeugt wird, dessen Druck einstellbar ist.

6. Verfahren nach Anspruch 5, bei dem das in den Kunststoff eingebrachte Druckmedium dasselbe Gas ist, das die Kraft auf die Trennwand ausübt.

7. Verfahren nach Anspruch 6, bei dem der Druck und das Volumen des die Trennwand beaufschlagenden Gases so eingestellt und bemessen werden, daß sich nach Verdrängen eines vorbestimmten Volumens des Kunststoffs in den zusätzlichen Überschußraum und entsprechendes Zurückweichen der Trennwand ein Druckgleichgewicht beiderseits der Trennwand einstellt.

8. Verfahren nach einem oder mehreren der Ansprüche 4 bis 7, bei dem die auf die Trennwand ausgeübte Kraft das Auswerfen des in den zusätzlichen Überschußraum verdrängten und verfestigten Kunststoffs durch die Trennwand beim Entformen bewirkt.

9. System zum Spritzgießen eines hohlen Kunststoffgegenstandes mit
- einer Einrichtung (326) zum Einspritzen einer fließfähigen Kunststoffmenge in einen eine wenigstens einen Teilbereich des Gegenstandes (337; 352) festlegende Form aufweisenden Formhohlraum (136; 21; 336),
- einer Einrichtung (332, 339, 341, 356, 340) zum Einbringen einer Füllung von unter Druck gesetztem Gas in den Formhohlraum (136; 21; 336), um einen Teil des Kunststoffs aus dem Formhohlraum (21; 136; 336) in einen mit dem Formhohlraum in Fließverbindung stehenden, volumenveränderlichen Überschußraum (24; 134; 325) zu verdrängen und
- einer Einrichtung (342, 343) zum Druckentlasten des Gases aus dem Formhohlraum (21; 136; 336),
**gekennzeichnet durch**:
- eine Einrichtung (30; 130; 234; 329; 166; 340, 347, 348, 349, 350) zum gesteuerten Sich-Vergrößernlassen des Volumens des Überschußraums (24; 134; 325) auf ein auf der in den Formhohlraum (21; 136; 336) eingespritzten Kunststoffmenge beruhendes Endvolumen in der Weise, daß während des Verdrängens des Teils des Kunststoffs von dem Formhohlraum (21; 136; 336) in den Überschußraum (24; 134; 325) oder während des Einspritzens ein Verdichten des fließfähigen Kunststoffs im Formhohlraum (154; 322, 324) vermieden und ein im wesentlichen spannungsfreier Gegenstand hergestellt wird.

10. System nach Anspruch 9, bei dem die Einrichtung zum Sich-Vergrößernlassen einen Zylinder (132, 327) und einen im Zylinder (132; 327) hin- und herbeweglich angeordneten Kolben (30; 130; 234; 329) umfaßt, die zusammen den Überschußraum (24; 134; 325) bilden und bei dem das System des weiteren eine Einrichtung (166; 340, 347, 349, 350) zum Steuern des auf den Kolben ausgeübten Drucks zum Steuern der Bewegung des Kolbens (30; 130; 234; 329) im Zylinder (132; 327) umfaßt.

11. System nach Anspruch 10, bei dem die Steuereinrichtung eine Luftfeder (138) zum Steuern des Drucks auf den Kolben (234) umfaßt.

12. System nach Anspruch 10, bei dem die Steuereinrichtung einen pneumatischen Steuerkreis (166) zum Steuern des Luftdrucks auf der unteren Fläche (32) des Kolbens (30; 130; 234; 329) umfaßt.

13. System nach Anspruch 12 mit einem entweder dem Kolben (30; 130; 234; 329) oder dem Zylinder (132; 327) zugeordneten Anschlag (142; 358), um ein Herausbewegen des Kolbens (30; 130; 234; 329) aus dem Zylinder (132; 327) zu verhindern.

14. System nach Anspruch 13, bei dem der Anschlag einen mit dem Kolben (30; 130; 234; 324) verbundenen und sich damit bewegenden Anschlagstift (144; 357) umfaßt.

15. System nach Anspruch 14, bei dem der Anschlagstift (144''') eine darin gebildete Bohrung (137''') umfaßt, die die untere Fläche des Kolbens (130''') mit dem pneumatischen Steuerkreis (166) fließend verbindet.

16. System nach Anspruch 12, bei dem der Zylinder eine darin angeordnete Öffnung (134; 150; 156; 182''''; 348) zum Fließverbinden der unteren Fläche (82) des Kolbens (30; 130; 234; 329) mit dem pneumatischen Steuerkreis (166; 340, 347, 349, 350) umfaßt.

17. System nach Anspruch 9 mit einer Einrichtung (186'''') zum Auswerfen des Teils des Kunststoffs aus dem Überschußraum (134'''').

18. System nach Anspruch 17, bei dem die Auswerfeinrichtung einen Auswerferstift (186'''') umfaßt.

19. System nach einem der Ansprüche 9 bis 18, **gekennzeichnet durch**:
- wenigstens einen in einer Form (322, 324) angeordneten Formhohlraum (336),
- wenigstens einem Angußkanal (330, 334) zum Einspritzen von druckbeaufschlagtem, fließfähigem Kunststoff,
- wenigstens einer Bohrung (332, 355) für ein unter Druck stehendes Gas zum Einbringen des Gases in den bereits in den Formhohlraum (336) eingespritzten Kunststoff,
- wenigstens einen in der Form (322, 324) außerhalb des Formhohlraums (336) und mit diesem über einen Kanal (338, 354) verbundenen, zusätzlichen, volumenveränderlichen Überschußraum (325),
- eine bewegliche Trennwand (329) in dem zusätzlichen Überschußraum (325) und
- eine das Volumen des zusätzlichen Überschußraums (325) in Richtung des Formhohlraums (336) verkleinernde Kraftbeaufschlagung der Trennwand (329), die größer als die durch den Druck des Kunststoffs während des Füllens des Formhohlraums (336) und spätestens mit Beginn des Austreibens von Kunststoff in den zusätzlichen Überschußraum (325) kleiner als die durch den Druck des in den Kunststoff im Formhohlraum (336) eingebrachten Gases auf die Trennwand (329) ausgeübte Kraft ist.

20. System nach Anspruch 19, bei dem die Trennwand aus einem in einer Bohrung (327) abgedichtet verschiebbaren Kolben (329) besteht.

21. System nach Anspruch 20, bei dem die Kraftbeaufschlagung des Kolbens (23) durch ein Druckmedium erfolgt.

22. System nach Anspruch 21, bei dem als Druckmedium das unter Druck stehende, in den Kunststoff einzubringende Gas verwendet wird.

23. System nach Anspruch 21 oder 22, bei dem ein Druckregelventil (347) und/oder ein Durchflußregelventil (350) in einer mit der Bohrung (327) für den Kolben (329) verbundenen Druckmediumleitung (348) angeordnet ist.

24. System nach einem der Ansprüche 21 bis 23, bei dem der Kolben (329) einen Dichtring (331) aufweist und sich eine Druckentlastungsbohrung (333) von der mit Druckmedium beaufschlagten Kolbenseite (335) zu einem Bereich unterhalb des Dichtrings (331) erstreckt.

25. System nach einem der Ansprüche 18 bis 24, bei dem die bewegliche Trennwand (329) einen Auswerfer für den in den zusätzlichen Überschußraum (325) verdrängten und verfestigten Kunststoff bildet.

26. System nach einem der Ansprüche 19 bis 25, bei dem ein den Kolben (329) in seiner Endstellung in der Bohrung (327) festhaltender, mechanischer Anschlag (358, 360) vorgesehen ist.

27. System nach einem der Ansprüche 19 bis 26, bei dem der zusätzliche Überschußraum (325) in einer Formhälfte (322) am Ende eines durch Druckgasbeaufschlagung hohl auszuführenden Bereichs (344, 353) des Kunststoffgegenstandes (337, 352) angeordnet ist, der den Formhohlraum (336) mit dem zusätzlichen Überschußraum (325) verbindende Kanal (328, 354) im Bereich der Teilfügenebene (323) zwischen beiden Formhälften (322, 324) liegt und die Öffnung (332, 355) zum Einbringen des unter Druck stehenden Gases in den Kunststoff am Anfang des durch Druckgasbeaufschlagung hohl auszuführenden Bereichs (344, 353) des Kunststoffgegenstandes (337, 352) angeordnet ist.

## Revendications

1. Procédé de moulage par injection d'un article creux en matière plastique (337, 352) comportant les étapes consistant à:
- injecter une quantité de matière plastique fluide dans une cavité de moule (136, 21, 336) ayant une forme définissant au moins une partie de l'article (337, 352),
- déplacer une partie de la matière plastique depuis la cavité de moule jusqu'à l'intérieur d'une cavité de déversement (24, 134, 325) un écoulement volumique variable étant couplé à la cavité de moule par introduction d'une charge de gaz sous pression à l'intérieur de la cavité de moule (21, 136, 336),
- permettre à la matière plastique injectée de se solidifier,
- mettre à l'air libre le gaz provenant de la cavité de moule (21, 136, 336), et
- enlever l'article en matière plastique du moule,
caractérisé en ce qu'il consiste à :
- remplir la cavité de moule (21, 136, 336) sans tasser la matière plastique fluide,
- permettre au volume de la cavité de déversement (24, 134, 325) d'augmenter de manière commandée jusqu'à un volume final sur la base de la quantité de matière plastique injectée dans la cavité de moule (21, 136, 336), le volume de la cavité de déversement (24, 134, 325) augmentant pendant l'étape consistant à déplacer et/ou pendant l'étape d'injection pour produire un article creux en matière plastique sensiblement exempt de contraintes.

2. Procédé selon la revendication 1, dans lequel le volume de la cavité de déversement est au moins partiellement défini par une surface supérieure d'un piston qui est monté de manière coulissante dans un cylindre et ayant une position haute et une position basse et le procédé comportant en outre l'étape consistant à augmenter la pression exercée sur le piston pour déplacer le piston vers sa position haute et l'étape consistant à permettre comportant l'étape consistant à réduire la pression exercée sur le piston.

3. Procédé selon la revendication 2, comportant en outre l'étape consistant à augmenter la pression exercée sur la surface inférieure du piston pour déplacer le piston vers sa position haute pour enlever la partie de la matière plastique de la cavité de déversement après l'étape de mise à l'air libre.

4. Procédé selon l'une quelconque des revendications 1 à 3, caractérisé en ce qu'il comporte les étapes consistant à:
- injecter une résine plastique coulante à travers une rigole d'alimentation jusqu'à l'intérieur d'une cavité de moule,
- injecter du gaz sous pression à l'intérieur de la résine plastique précédemment injectée dans la cavité de moule, au plus tard lorsque la cavité de moule est remplie de résine plastique,
- déplacer une partie de la résine plastique encore coulante vers l'extérieur du tronçon de l'article en matière plastique à rendre creux et jusqu'à l'intérieur d'une cavité de déversement à volume variable supplémentaire communiquant avec la cavité de moule à travers un canal,
- lutter contre la force d'une cloison sur laquelle une force est appliquée de l'intérieur de la cavité de déversement supplémentaire, pour l'acceptation commandée de résine plastique par augmentation du volume de la cavité de déversement supplémentaire, cette force étant plus grande que la pression appliquée par la matière plastique sur la cloison pendant le remplissage de la cavité du moule et, au plus tard au début du déplacement de la résine plastique jusqu'à l'intérieur de la cavité de déversement supplémentaire, étant plus petite que la pression appliquée sur la cloison par le gaz injecté dans la résine plastique située à l'intérieur de la cavité de moule,
- refroidir et solidifier la résine plastique,
- supprimer la pression dans le tronçon creux formé par l'injection de gaz,
- démouler l'article en matière plastique et la matière plastique déplacée située dans la cavité de déversement supplémentaire.

5. Procédé selon la revendication 4, dans lequel la force appliquée sur la cloison est produite par un fluide sous pression, dont la pression est réglable.

6. Procédé selon la revendication 5, dans lequel le fluide sous pression injecté dans la résine plastique est le même gaz que celui utilisé pour appliquer la force sur la cloison.

7. Procédé selon la revendication 6, dans lequel la pression et le volume du gaz agissant sur la cloison sont ajustés et dimensionnés de telle sorte qu'après déplacement du volume prédéterminé de résine plastique dans la cavité de déversement supplémentaire et le retrait approprié de la cloison, un équilibre de pression est obtenu des deux côtés de la cloison.

8. Procédé selon l'une quelconque des revendications 4 à 7, dans lequel la force exercée sur la cloison amène la matière plastique déplacée dans la cavité de déversement supplémentaire et solidifiée pendant le démoulage à être éjectée par la cloison.

9. Système de moulage par injection d'un article creux en matière plastique, le système comportant:
- des moyens (326) pour injecter une quantité de matière plastique fluide à l'intérieur d'une cavité de moule (136 ; 21 ; 336) ayant une forme définissant au moins une partie de l'article (337 ; 352),
- des moyens (332, 339, 341, 356, 340) pour introduire une charge de gaz sous pression à l'intérieur de la cavité de moule (136 ; 21 ; 336) pour déplacer une partie de la matière plastique depuis la cavité de moule (21 ; 136 ; 336) jusqu'à l'intérieur d'une cavité de déversement (24 ; 134 ; 325) ayant un écoulement volumique variable couplé à la cavité de moule (21 ; 136 ; 336), et
- des moyens (342, 343) pour mettre à l'air libre le gaz provenant de la cavité de moule (21 ; 136 ; 336),
caractérisé en ce qu'il comporte :
- des moyens (30 ; 130 ; 234 ; 329 ; 166 ; 340, 347, 348, 349, 350) pour permettre au volume de la cavité de déversement (24 ; 134 ; 325) d'augmenter d'une manière commandée jusqu'à un volume final sur la base de la quantité de matière plastique injectée dans la cavité de moule (21 ; 136 ; 336) d'une manière telle que pendant le déplacement de la partie de la matière plastique à partir de la cavité de moule (21 ; 136 ; 336) jusqu'à l'intérieur de la cavité de déversement (24 ; 134 ; 325) ou pendant l'injection, le tassement de la matière plastique située dans le moule (154 ; 322, 324) est évité et qu'un article sensiblement exempt de contraintes est produit.

10. Système selon la revendication 9, dans lequel les moyens pour permettre comportent un cylindre (132 ; 327) et un piston (30 ; 130 ; 234 ; 329) monté mobile en va-et-vient dans le cylindre (136 ; 327), ceux-ci définissant ensemble la cavité de déversement (24 ; 134 ; 325) et dans lequel le système comporte en outre des moyens (166 ; 340, 347, 349, 350) pour commander la pression exercée sur le piston pour commander le déplacement du piston (30 ; 130 ; 234 ; 329) dans le cylindre (132 ; 324).

11. Système selon la revendication 10, dans lequel les moyens pour commander comportent un ressort pneumatique (138) pour commander la pression exercée sur le piston (234).

12. Système selon la revendication 10, dans lequel les moyens pour commander comportent un circuit de commande pneumatique (66) pour commander la pression pneumatique exercée sur la surface inférieure (32) du piston (30 ; 130 ; 234 ; 329).

13. Système selon la revendication 12, comportant en outre une butée (142 ; 348) associée à l'un parmi le piston (30 ; 130 ; 234 ; 329) et le cylindre (132 ; 327) pour empêcher un déplacement du piston (30 ; 130 ; 234 ; 329) jusqu'à l'extérieur du cylindre (132 ; 327).

14. Système selon la revendication 13, dans lequel la butée comporte un axe de butée (144 ; 357) connecté au piston (30 ; 130 ; 234 ; 324) pour se déplacer avec celui-ci.

15. Système selon la revendication 14, dans lequel l'axe de butée (144''') comporte un trou (137''') formé dans celui-ci pour mettre en communication hydraulique la surface inférieure du piston (130''') avec le circuit de commande pneumatique (166).

16. Système selon la revendication 12, dans lequel le cylindre comporte une ouverture (134 ; 150 ; 156 ; 182'''' ; 348) agencée dans celui-ci pour faire communiquer hydrauliquement la surface inférieure (82) du piston (30 ; 130 ; 234 ; 329) avec le circuit de commande pneumatique (166 ; 340, 347, 348, 350).

17. Système selon la revendication 9, comportant en outre des moyens (186'''') pour éjecter la partie de la matière plastique à partir de la cavité de déversement (134'''').

18. Système selon la revendication 17, dans lequel les moyens pour éjecter comportent un axe éjecteur (186'''').

19. Système selon l'une quelconque des revendications 9 à 18, caractérisé en ce qu'il comporte:
- au moins une cavité de moule (336) située à l'intérieur d'un moule (322, 324),
- au moins une goulotte d'alimentation (330, 334) pour injecter une résine plastique coulante sous pression,
- au moins un alésage (332, 355) destiné à un gaz sous pression pour injecter le gaz à l'intérieur de la résine plastique injectée au préalable dans la cavité de moule (336),
- au moins une cavité de déversement supplémentaire à volume réglable (325) positionnée à l'intérieur du moule (322, 324), à l'extérieur de la cavité de moule (336) et communiquant avec celle-ci par l'intermédiaire d'un canal (338, 354),
- une cloison mobile (329) située à l'intérieur de la cavité de déversement supplémentaire (325) et
- l'application d'une force sur la cloison (329) réduisant le volume de la cavité de déversement supplémentaire (325), dans la direction de la cavité de moule (336), cette force étant plus grande que la force exercée sur la cloison (329) par la pression de la matière plastique pendant le remplissage de la cavité de moule (336) et, au plus tard au début du déplacement de la résine plastique jusqu'à l'intérieur de la cavité de déversement supplémentaire (325), étant plus petite que la force appliquée sur la cloison (329) par la pression du gaz injecté dans la résine plastique située à l'intérieur de la cavité de moule (336).

20. Système selon la revendication 19, dans lequel la cloison est constituée d'un piston pouvant coulisser (329), rendu étanche à l'intérieur d'un alésage (327).

21. Système selon la revendication 20, dans lequel l'application d'une force sur le piston (329) est effectuée par un fluide sous pression.

22. Système selon la revendication 21, dans lequel le gaz sous pression injecté à l'intérieur de la résine plastique est utilisé en tant que fluide sous pression.

23. Système selon la revendication 21 ou 22, dans lequel une vanne de régulation de pression (347) et/ou une vanne de régulation d'écoulement (350) est positionnée dans une ligne de fluide sous pression (348) connectée à l'alésage (327) destiné au piston (329).

24. Système selon l'une quelconque des revendications 21 à 23, dans lequel le piston (329) présente un anneau formant joint (331) et un perçage de libération de pression (333) s'étend à partir de la face arrière du piston (335) au niveau de laquelle le fluide sous pression est appliqué, vers un espace situé en dessous de l'anneau formant joint (331).

25. Système selon l'une quelconque des revendications 18 à 24, dans lequel la cloison mobile (329) agit en tant qu'éjecteur de la résine plastique déplacée à l'intérieur de la cavité de déversement supplémentaire (325) et ensuite solidifiée.

26. Système selon l'une quelconque des revendications 19 à 25, dans lequel une butée mécanique (358, 360) est agencée pour limiter le piston (329) à sa position ultime dans l'alésage (327).

27. Système selon l'une quelconque des revendications 19 à 26, dans lequel la cavité de déversement supplémentaire (325) est située dans un demi-moule (322) à l'extrémité d'un tronçon creux (344, 353) de l'article en matière plastique (337, 352) à rendre creux par application d'un gaz sous pression, un canal (328, 354) situé dans la zone du plan de séparation (323) entre les deux demi-moules (322, 324) relie la cavité de moule (336) à la cavité de déversement supplémentaire (325) et l'ouverture (332, 335) destinée à injecter le gaz sous pression dans la résine plastique est positionnée au début de tronçon (344, 353) de l'article en matière plastique (337, 352) à rendre creux par application de gaz sous pression.
